# EUROPEAN PATENT APPLICATION

(11) **EP 2 918 865 A1**
(43) Date of publication of application: **16.09.2015**
(21) Application number: 13852867.4
(22) Date of filing: 06.11.2013
(51) Int. Cl.: F16D 65/092, B61H 5/00

(54) **DISC BRAKE FRICTION PAD ASSEMBLY**

(30) Priority: 08.11.2012 JP 2012246707; 09.11.2012 JP 2012247713
(71) Applicant: Akebono Brake Industry Co., Ltd., Tokyo 103-8534 (JP)
(72) Inventor: MAEHARA Toshifumi, Tokyo 103-8534 (JP); YOSHIKAWA Kazuhiro, Tokyo 103-8534 (JP); ODANAKA Yusuke, Tokyo 103-8534 (JP)
(74) Representative: Grünecker Patent- und Rechtsanwälte PartG mbB
(86) International application number: PCT/JP2013/080011
(87) International publication number: WO 2014/073566

(57) **Abstract**

This disc brake friction pad assembly is provided with: a plurality of lining assemblies (27); a torque-receiving plate fixed to a guide plate (25) in which a component-accommodating space is configured; first and second link plates deployed across the plurality of lining assemblies (27); and fastening parts (45, 46) that are disposed across the guide plate (25) and the torque-receiving plate, and are positioned at the vertices of triangles (49) that enclose the centers of gravity (47) of the lining assemblies (27).

## Description

### Technical Field

The present invention relates to a friction pad assembly for a disk brake in which a plurality of lining assemblies is turnably supported by a guide plate which receives braking torque, and generates a braking force by sliding friction when the lining assemblies are pressed to a disk rotor.

### Background Art

A disk brake apparatus includes: a disk rotor which is fixed to an axle; a friction pad assembly for a disk brake in which a lining member is assembled to a surface on the disk rotor side in a torque receiving plate that is placed to face the disk rotor; and a brake caliper in which an actuator that drives the torque receiving plate forward and backward toward the disk rotor is embedded, and which is fixed to a vehicle body frame. The disk brake apparatus generates a braking force by sliding friction when the torque receiving plate advances to the disk rotor side and a lining member is pressed to the disk rotor.

In the disk brake apparatus for a railroad vehicle, since the disk rotor or a friction pad assembly for a disk brake is large in size, when the lining member which is pressed to the disk rotor is formed as an integrated component, a number of non-contact regions increases due to undulation or the like which is generated in the disk rotor by frictional heat or the like, a stabilized friction area cannot be maintained, and stabilized braking properties cannot be obtained.

In addition, when the lining member unintentionally rotates due to a contact with the disk rotor, according to this, loss is generated in transmitting braking torque, and brake noise is generated. For this reason, means for regulating rotation of the lining member is necessary, an increase in the number of components causes an increase in cost, and at the same time, an increase in the number of assembling processes according to the increase in the number of components causes deterioration in productivity.

Here, in order to solve such a problem, there has been suggested a friction pad assembly for a disk brake, in which a lining assembly which is turnably (swingably) supported by a guide plate and which is pressed to the disk rotor, including: a plate fitting portion in which an outer circumferential surface turnably fits to a guide hole portion of the guide plate; and a retaining flange portion which has a greater outer diameter than that of the guide hole portion, in a back plate portion which is fixed to a back surface of a friction material, in which the friction pad assembly for a disk brake has a configuration in which braking torque which acts when the disk rotor and the friction material come into contact with each other is transmitted from the plate fitting portion to the guide plate, and in which a plurality of link plates that are arranged to bridge over the plurality of lining assemblies and transmit a pressing force from the torque receiving plate to these lining assemblies, are provided between the torque receiving plate that makes a void between the torque receiving plate and the back plate portion, and the back plate portion (refer to PTL 1).

In the friction pad assembly for a disk brake which has this configuration, the link plate includes: a single plate abutting curved surface portion which abuts against a link supporting portion of the torque receiving plate, and is turnably supported; a plurality of back plate abutting curved surface portions which abut against link abutting portions at the centers of back plate portions of each of the lining assemblies and in which the lining assemblies are turnably supported; and a rotation regulating portion which is loosely fitted to engagement holes which are formed at positions that are apart from the centers of the back plate portions of each of the lining assemblies, and which regulates turning behavior of each of the lining assemblies.

In other words, a member which receives the braking torque from the lining assembly, and a member which transmits the pressing force to the lining assembly, are separately set, and the braking torque which becomes a large load does not act on each contact portion between the plate abutting curved surface portion and the back plate abutting curved surface portion which transmit the pressing force to the lining assembly, and the torque receiving plate. For this reason, each contact portion which transmits the pressing force is not necessarily strongly engaged, such as a ball joint which stops the braking torque, and it is possible to realize a reduction in cost by reducing of the processing accuracy requirements and improvement of productivity.

In addition, the rotation regulating portion which regulates the turning behavior of each lining assembly and is operated as the engagement hole which is formed in the back plate portion and the rotation regulating portion which is projected in the link plate are fitted to each other. For this reason, it is possible to avoid disadvantages, such as an increase in cost due to an increase in the number of components, or deterioration of productivity due to an increase in the number of assembly processes.

### Citation List

### Patent Literature

[PTL 1] JP-A-2008-133948

### Summary of Invention

### Technical Problem

Meanwhile, the friction pad assembly for a disk brake in the above-described PTL 1 or the like, has a housing structure in which the plurality of lining assemblies which are linked by the link plate is stored in a constituent component accommodation space which is disposed between the torque receiving plate and the guide plate.

However, in the above-described housing structure in the related art, it is difficult to ensure rigidity and is easily vibrated since all of the fastening portions between the torque receiving plate and the guide plate are arranged in an outer circumferential portion of the torque receiving plate and the guide plate. As a result, there is a concern that brake noise or the like is generated.

In addition, in the friction pad assembly for a disk brake described above in PTL 1 or the like, a plate spring which is fitted into the plate fitting portion is mounted to be inserted in the guide hole portion from a back surface side of the guide plate to be held between the guide plate and the retaining flange portion, and the braking torque which acts when the disk rotor and the friction material come into contact with each other is transmitted from the plate fitting portion to the guide plate. Since the plate spring absorbs a dimensional tolerance in a thickness direction of the lining assembly, it is possible to prevent generation of irregularity in contact properties of each lining assembly with respect to the disk rotor.

However, the plate spring is set to have a greater outer diameter than that of the guide hole portion, is fitted into the outer circumference of the plate fitting portion, and is held between the guide plate and the retaining flange portion. For this reason, the lining assembly in which the plate spring is fitted into the plate fitting portion has a low degree of freedom in turning properties, and there is a possibility that uneven wear is generated on a lining surface due to a high temperature or the like when braking is performed.

A first object of the present invention is to provide a friction pad assembly for a disk brake which can suppress generation of brake noise by strengthening rigidity of a housing structure, by considering the above-described situation.

In addition, a second object of the present invention is to provide a friction pad assembly for a disk brake which enhances the degree of freedom in turning of the lining assembly, and suppresses uneven wear.

### Solution to Problem

A first object according to the present invention is achieved by the following configurations (1) to (4).
(1) According to an aspect of the invention, there is provided a friction pad assembly for a disk brake, comprising:
   a plurality of lining assemblies which are turnably supported by a guide plate receiving braking torque so as to be pressed to a disk rotor;
   a back plate portion which is fixed to a back surface of a friction material of the lining assembly;
   a plurality of guide hole portions which are provided in the guide plate, and through which at least the friction material of each of the lining assemblies penetrates to a side of the disk rotor;
   a torque receiving plate which is fixed to the guide plate in which a constituent component accommodation space is formed, and constitutes a housing structure together with the guide plate;
   a link plate which is provided between the torque receiving plate and the back plate portion, is arranged to bridge over the plurality of lining assemblies, so as to transmit a pressing force from the torque receiving plate to the lining assembly; and
   fastening portions which are provided across the guide plate and the torque receiving plate and around each of the lining assemblies, and which are disposed at least at each apex position of a triangle that surrounds a center of gravity of the lining assembly.

According to the friction pad assembly for a disk brake having the configuration in the above-described (1), the center of gravity (area center on a lining surface of the friction material) of all of the lining assemblies is positioned on an inner side of the triangle which links three locations selected from the plurality of fastening portions that are disposed in the periphery of each of the lining assemblies. Accordingly, when receiving the pressing force from the lining assembly, the guide plate and the torque receiving plate which constitute the housing structure can receive the pressing force from the lining assembly in a state where the center of gravity of the lining assembly is positioned on the inner side of the fastening portion disposed at least in the triangle, and can ensure sufficient strength of the housing.
(2) In the friction pad assembly for a disk brake having the configuration in the above-described (1), the fastening portion, which is provided at parts of the guide plate and the torque receiving plate where the constituent component accommodation space is formed, includes an interval holding mechanism which holds an interval of the constituent component accommodation space.

According to the friction pad assembly for a disk brake having the configuration in the above-described (2), as the interval holding mechanism, in which the fastening portion which is provided at the part where the constituent component accommodation space is formed other than an outer circumferential portion of the guide plate and the torque receiving plate, holds the interval of the constituent component accommodation space, is provided, the excellent accuracy of the constituent component accommodation space which is formed of the guide plate and the torque receiving plate is ensured, and firm fastening is realized.
(3) In the friction pad assembly for a disk brake having the configuration in the above-described (2), the interval holding mechanism includes a spacer member which is intervened between the guide plate and the torque receiving plate, and a fastening member which sandwiches and fixes the guide plate, the spacer member, and the torque receiving plate by penetrating the guide plate, the spacer member, and the torque receiving plate.

According to the friction pad assembly for a disk brake having the configuration in the above-described (3), by the spacer member which is intervened between the guide plate and the torque receiving plate, it is possible to ensure the excellent accuracy and low cost of the constituent component accommodation space in the vicinity of a center portion of the guide plate and the torque receiving plate.
(4) In the friction pad assembly for a disk brake having the configuration in the above-described (3), a step portion, which is fitted to a hole portion formed on the guide plate or the torque receiving plate, is formed on at least one end side of the spacer member in a separating direction of the constituent component accommodation space.

According to the friction pad assembly for a disk brake having the configuration in the above-described (4), when the step portion is provided on at least one end side of the spacer member, it is easy to position the spacer member by fitting the spacer member to the hole portion on the other end side, and assembling properties are improved.

In addition, a second object according to the present invention is achieved by the following configurations (5) to (6).
(5) According to another aspect of the invention, there is provided a friction pad assembly for a disk brake, comprising:
   a plurality of lining assemblies which are turnably supported by a guide plate which receives braking torque so as to be pressed to a disk rotor;
   a plate fitting portion which is provided on an outer circumferential surface of a back plate portion fixed to a back surface of a friction material of the lining assembly, and is turnably fitted to a guide hole portion provided in the guide plate;
   a retaining flange portion which is provided in the lining assembly, and has an outer diameter greater than that of the guide hole portion;
   a torque receiving plate which is fixed to the guide plate so as to have an interval between the back plate portion and the torque receiving plate;
   a link plate which is provided between the torque receiving plate and the back plate portion, is arranged to bridge over the plurality of lining assemblies, so as to transmit a pressing force from the torque receiving plate to the lining assembly;
   a single plate abutting curved surface portion which is provided in the link plate abuts against a link supporting portion of the torque receiving plate, and turnably supports the link plate;
   a plurality of back plate abutting curved surface portions which are provided in the link plate, respectively abut against link abutting portions at centers of the back plate portions of the lining assemblies, and turnably support the lining assemblies;
   a rotation regulating portion which is provided in the link plate, is loosely fitted to an engagement hole at a position apart from the center of the back plate portion of each of the lining assemblies, and regulates turning behavior of each of the lining assemblies; and
   a spring member which is held between the link plate and the back plate portion, and supports the lining assembly so as to bias the lining assembly to a side of the guide plate.

According to the friction pad assembly for a disk brake having the configuration in the above-described (5), the single plate abutting curved surface portion which is provided in the link plate abuts against the link supporting portion of the torque receiving plate, and the link plate is turnably supported with respect to the torque receiving plate. In addition, the back plate abutting curved surface portion provided in the link plate abuts against the link abutting portion of the back plate portion of each of the lining assemblies, the lining assembly is turnably supported with respect to the link plate.

Here, the lining assembly when braking is not performed, is supported by the spring member which is mounted in a compressed state between the back plate portion that opposes the link plate and a front surface of the link plate, in a state of being biased to the guide plate side. In the compressed state of being held between the link plate and the back plate portion, the spring member biases the lining assembly to the guide plate side so that the retaining flange portion is maintained in a state of being abutted against a circumferential edge portion of the guide hole portion.

In addition, when braking is started to be performed, the pressing force which presses the lining assembly to the disk rotor, acts on the lining assembly via the link plate and the spring member, from the torque receiving plate. When a reactive force from the disk rotor increases, the spring member and a plate flexible portion of the link plate are elastically deformed, and the pressing force which presses the lining assembly acts on the lining assembly only via the link plate from the torque receiving plate. At this time, the retaining flange portion separates from the circumferential edge portion of the guide hole portion, the lining assembly is turnably supported with respect to the link plate by the back plate abutting curved surface portion, and adjustment of position is possible. Therefore, since the lining assembly which has a high degree of freedom in turning follows undulation of the front surface of the disk rotor in each of individual turning operations, and comes into contact with the front surface of the disk rotor, it is possible to maintain a stabilized friction area, and to maintain stabilized braking properties.

The link plate which adjusts the position of the lining assembly is placed to compress the spring member and abut against the lining assembly. In other words, the guide plate and the link plate receive a set load of the spring member. When braking is released, the lining assembly of which the position is adjusted when braking is performed, is at a position (that is, a reset position) in which the retaining flange portion abuts against the circumferential edge portion of the guide hole portion by the set load of the spring member. Therefore, even when uneven wear is generated on the lining surface due to a high temperature or the like when braking is performed, if braking is released, the lining assembly returns to the reset position where the flange portion abuts against the circumferential portion of the guide hole portion due to a generated posture of the uneven wear. Accordingly, when braking is performed next time, since the lining assembly starts coming into contact with the front surface of the disk rotor from a convex portion on the lining surface, an increase in the uneven wear is suppressed.
(6) In the friction pad assembly for a disk brake having the configuration in the above-described (5), the spring member is made of a disc spring, and
   an inner diameter portion of the disc spring abuts against the link plate, and an outer diameter portion of the disc spring abuts against the back plate portion.
According to the friction pad assembly for a disk brake having the configuration in the above-described (6), the inner diameter portion of the disc spring abuts against the link plate, and the outer diameter portion abuts against the back plate portion of the lining assembly. Here, when the lining surface follows the deformation of the front surface of the disk rotor by heat or the like in the middle of braking, if an inclination is generated in the lining assembly, a restraining force with respect to the inclination of the lining assembly due to the disc spring having a high spring constant increases. Accordingly, inducing vibration is suppressed, and generation of brake noise is reduced.

Above, the present invention is briefly described. Furthermore, by reviewing an aspect (hereinafter, referred to as an "embodiment") for realizing the present invention described below with reference to the attached drawings, the present invention will be clarified in more detail.

### Brief Description of Drawings

Fig. 1 is a front view of a friction pad assembly for a disk brake according to an embodiment of the present invention.
Fig. 2 is a rear view of the friction pad assembly for a disk brake illustrated in Fig. 1.
Fig. 3 is a perspective view when a first friction pad assembly illustrated in Fig. 1 is viewed from a rear side.
Fig. 4 is a front view of the first friction pad assembly illustrated in Fig. 1.
Fig. 5 is a rear view of a state where a torque receiving plate is detached from the first friction pad assembly illustrated in Fig. 3.
Fig. 6 is an A-A arrow view in Fig. 4.
Fig. 7 is a B-B arrow view in Fig. 4.
Fig. 8(a) is an enlarged view of main portions in Fig. 7 when braking is not performed. Fig. 8(b) is an enlarged view of the main portions in Fig. 7 in the middle of braking. Fig. 8(c) is an enlarged view of main portions in Fig. 7 when braking is performed.
Fig. 9 is a rear view of a guide plate illustrating a positional relationship between the lining assembly and a fastening portion.
Fig. 10 is a rear view of the guide plate in which a spring member is disposed in the lining assembly mounted on a guide hole portion.

### Description of Embodiments

Hereinafter, an embodiment of the present invention will be described with reference to the drawings.

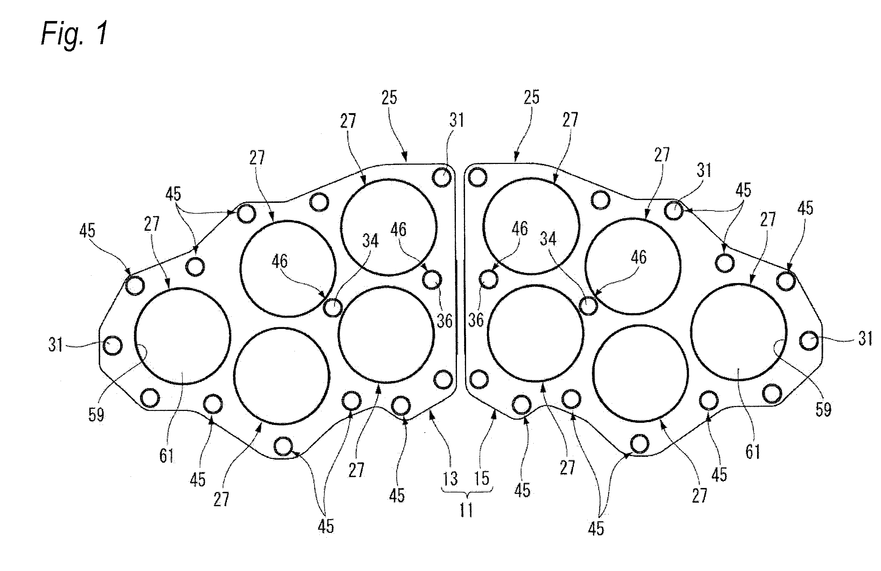

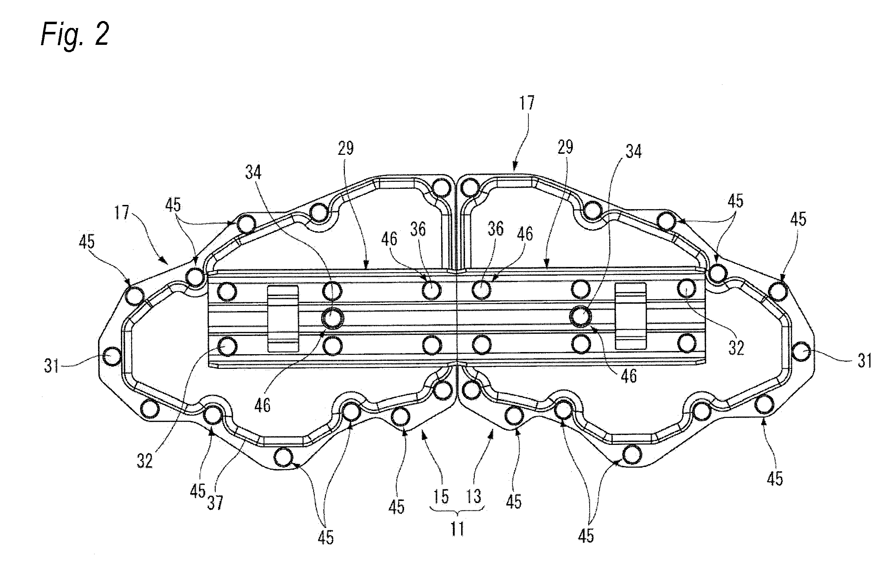

A friction pad assembly for a disk brake 11 according to the embodiment of the present invention is used in a disk brake apparatus for a railroad vehicle. As illustrated in Figs. 1 and 2, in a circumferential direction of a disk rotor which is not illustrated on an axle, the friction pad assembly for a disk brake 11 is configured of two assemblies, including a first friction pad assembly 13 and a second friction pad assembly 15, which are disposed to be adjacent to each other.

The first friction pad assembly 13 and the second friction pad assembly 15 have the same configuration as each other, face the disc rotor on the axle, and are driven forward and backward toward a front surface of the disk rotor by an actuator embedded in a brake caliper which is fixed to a vehicle body frame.

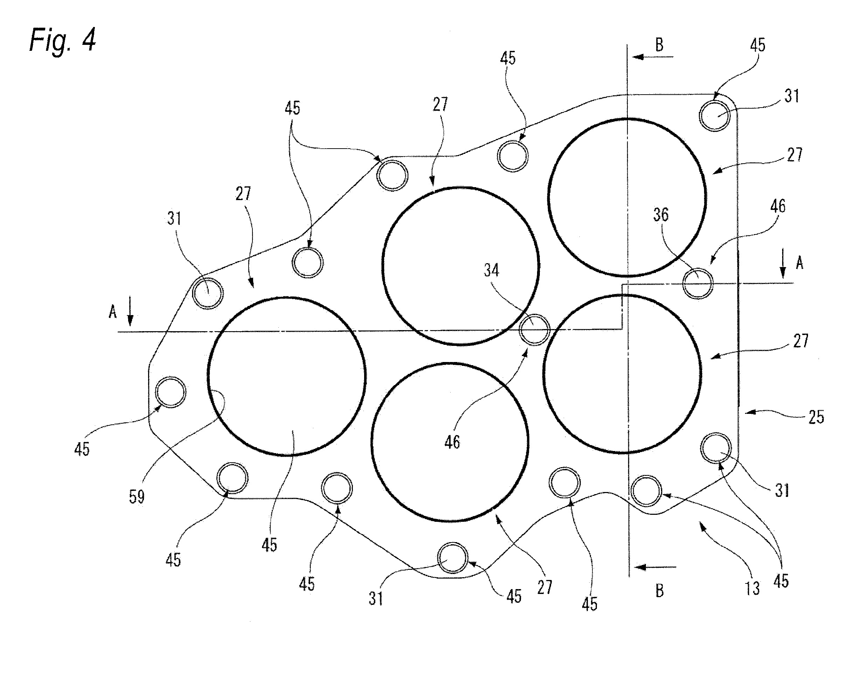

As illustrated in Figs. 4 to 7, the first friction pad assembly 13 and the second friction pad assembly 15 are configured of a torque receiving plate 17 which is driven forward and backward toward the disk rotor by the actuator embedded in the brake caliper which is not illustrated, two calipers, including a first link plate 21 and a second link plate 23, which are laid on a substantial plane on a surface on the disk rotor side of the torque receiving plate 17, a guide plate 25 which is fixed to be connected to the torque receiving plate 17 on the disk rotor side of the torque receiving plate 17, and five lining assemblies 27 which are turnably supported to be fitted to the guide plate 25.

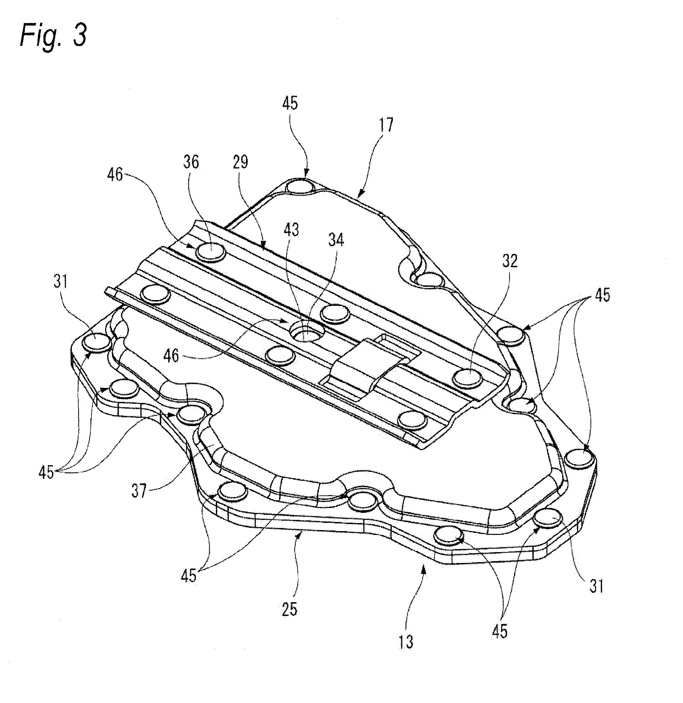

As illustrated in Fig. 3, on a back surface of the torque receiving plate 17, an anchor plate 29 is installed to be fixed by a rivet 32. The anchor plate 29 can be driven forward and backward toward the disk rotor of the first friction pad assembly 13 and the second friction pad assembly 15, by being connected to the actuator embedded in the brake caliper.

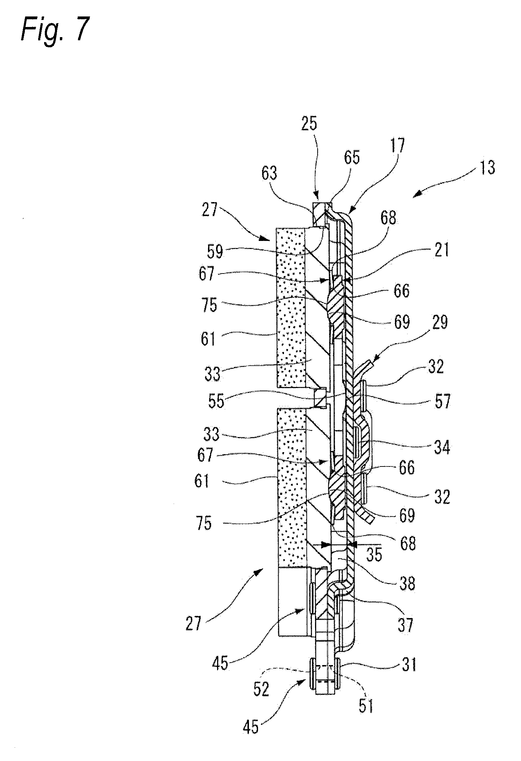

Since the torque receiving plate 17 constitutes a constituent component accommodation space 38 which makes an interval 35 between the torque receiving plate 17 and a back plate portion 33 of the lining assemblies 27 illustrated in Fig. 7, the torque receiving plate 17 is molded in a thin disk shape in which a circumferential wall 37 is formed to be protruded to a circumferential edge portion of a flat plate material and a rear surface side of the back plate portion 33 is sealed. The torque receiving plate 17 is fixed to the guide plate 25 in which the constituent component accommodation space 38 is formed between the torque receiving plate 17 and the back plate portion 33 of the lining assemblies 27, and constitutes a housing structure together with the guide plate 25.

The torque receiving plate 17 is fixed to the guide plate 25 by fastening portions 45 and 46 which are provided across the guide plate 25 and the torque receiving plate 17 around each of the lining assemblies 27.

By a rivet 31 which penetrates hole portions 51 and 52 that are respectively punched in outer circumferential portions of the guide plate 25 and the torque receiving plate 17, the fastening portions 45 sandwich and fix the outer circumferential portions of the guide plate 25 and the torque receiving plate 17.

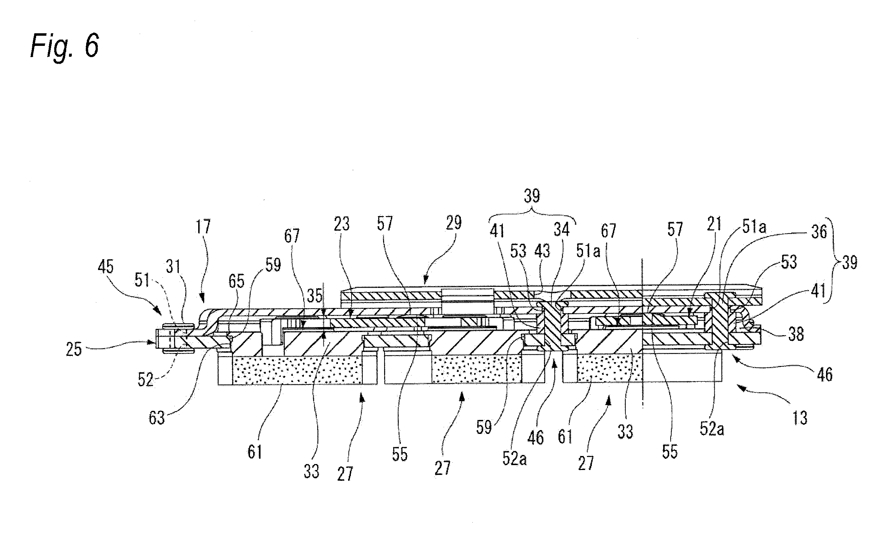

In addition, by rivets 34 and 36 which penetrate hole portions 51 a and 52a that are punched at a part which constitutes the constituent component accommodation space 38 of the guide plate 25 and the torque receiving plate 17, the fastening portion 46 sandwiches and fixes a part which constitutes the constituent component accommodation space 38 of the guide plate 25 and the torque receiving plate 17. In addition, as illustrated in Fig. 6, the rivet 36 also sandwiches and fixes the anchor plate 29 by penetrating the anchor plate 29 together with the guide plate 25 and the torque receiving plate 17.

In addition, the fastening portion 46 which sandwiches and fixes the part which constitutes the constituent component accommodation space 38 of the guide plate 25 and the torque receiving plate 17 by the rivets 34 and 36, is provided with an interval holding mechanism 39 which holds the interval 35 of the constituent component accommodation space 38.

The interval holding mechanism 39 according to the embodiment includes a spacer member 41 (refer to Fig. 6) in a hollow cylindrical shape which is intervened between the guide plate 25 and the torque receiving plate 17, and the rivets 34 and 36 which are fastening members that sandwich and fix the hole portion 52a of the guide plate 25, the spacer member 41, and the hole portion 51 a of the torque receiving plate 17 by penetrating the hole portion 52a, the spacer member 41, and the hole portion 51 a. In addition, the fastening members are not limited to the rivets 34 and 36, and other fastening members, such as a bolt or nut, can be used. In the anchor plate 29, a through hole 43 which is an operation hole when fastening the rivet 36 of the above-described interval holding mechanism 39 is opened (refer to Fig. 3). In addition, the spacer member 41 is placed between the first link plate 21 and the second link plate 23 and interference is not performed.

In addition, on at least one end side of a separating direction of the constituent component accommodation space 38 of the spacer member 41, a step portion 53 which is fitted to the hole portion 51 a which is at least one of the hole portions 51 a and 52a that are respectively punched in the torque receiving plate 17 and the guide plate 25, is formed.

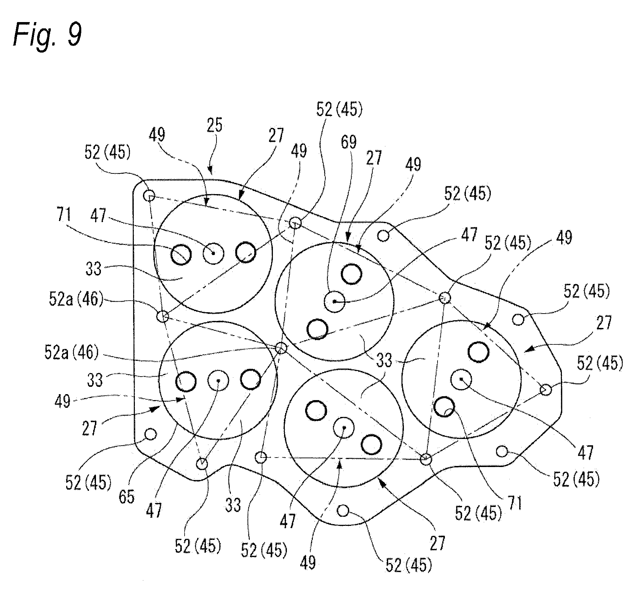

In other words, in the friction pad assembly for a disk brake 11 of the embodiment, in the periphery of each of the lining assemblies 27, the fastening portions 45 and 46 (refer to Fig. 4) are provided by the rivets 31, 32, and 34 across the guide plate 25 and the torque receiving plate 17. These fastening portions 45 and 46 are disposed at least at each apex position of a triangle 49 which surrounds a center of gravity (area center on the lining surface of a friction material 61) 47 of the lining assembly 27 (refer to Fig. 9).

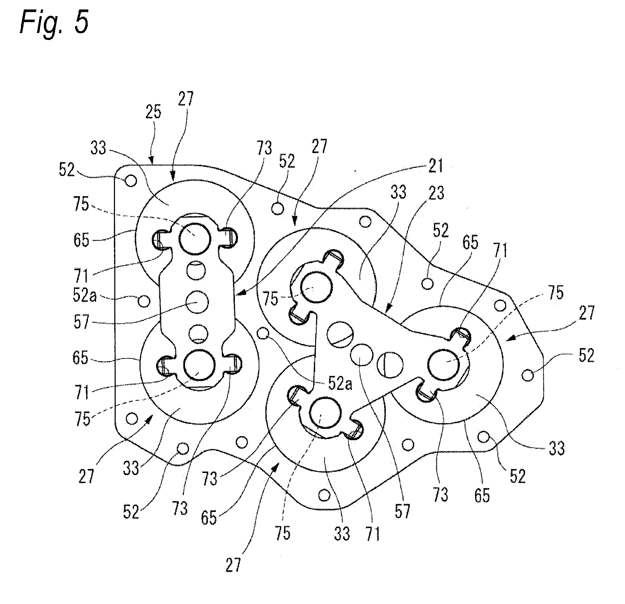

As illustrated in Fig. 5, the first link plate 21 and the second link plate 23 are arranged to bridge over the plurality of lining assemblies 27, and the pressing force from the torque receiving plate 17 is transmitted to these lining assemblies 27.

On a surface on the first link plate 21 and the second link plate 23 sides of the torque receiving plate 17, a link supporting portion 55 which is a smooth surface for turnably supporting each of the first link plate 21 and the second link plate 23, is formed to correspond to a substantially center of gravity position of each of the first link plate 21 and the second link plate 23.

Meanwhile, at the substantially center of gravity positions of the first link plate 21 and the second link plate 23, a single plate abutting curved surface portion 57, which abuts against the link supporting portion 55 that is formed in the torque receiving plate 17, and is turnably supported, is formed. In the embodiment, the plate abutting curved surface portion 57 is formed on a convex curved surface which turnably abuts against the link supporting portion 55.

In addition, in the embodiment, in the first link plate 21 and the second link plate 23, the plate abutting curved surface portion 57 at the substantially center of gravity position abuts against the torque receiving plate 17, and is turnably supported. Here, except the plate abutting curved surface portion 57, between the surface on the torque receiving plate side of the first link plate 21 and the second link plate 23 and the torque receiving plate 17, a void which allows turning is formed.

In the guide plate 25, five guide hole portions 59 through which at least the friction material 61 penetrates to the disk rotor side, are formed with a predetermined separation interval. The lining assemblies 27 are mounted on each of the guide hole portions 59.

The lining assembly 27 is configured of the friction material 61 which is molded in a substantially circular plate shape, and the back plate portion 33 which is fixed to the back surface of the friction material 61. In the back plate portion 33, as illustrated in Figs. 6 and 7, a plate fitting portion 63 which is turnably fitted to the circular guide hole portion 59 in which the outer circumferential surface is formed to penetrate the guide plate 25, and a retaining flange portion 65 which has a greater outer diameter than that of the guide hole portion 59, are provided. The lining assembly 27 transmits the braking torque which acts when the disk rotor and the friction material 61 come into contact with each other, from the plate fitting portion 63 to the guide plate 25.

Here, between the first link plate 21 and the second link plate 23, and the back plate portion 33 of each of the lining assemblies 27, a disc spring 67, which is a spring member that supports the lining assembly 27 in a state of being biased to the guide plate side, is held.

The spring member in the embodiment is configured of the disc spring 67 illustrated in Fig. 7. The disc spring 67 is clamped between the first link plate 21 or the second link plate 23 and the back plate portion 33, while an inner diameter portion 66 abuts against the first link plate 21 or the second link plate 23, and an outer diameter portion 68 abuts against the back plate portion 33. The position of the disc spring 67 is regulated as the inner diameter portion 66 is engaged with a back plate abutting curved surface portion 75 of the first link plate 21 or the second link plate 23. It is preferable that the disc spring 67 has a spring constant approximately from 0.3 N/mm/mm² to 0.8 N/mm/mm².

In the back plate portion 33 of each of the lining assemblies 27, a link abutting portion 69 illustrated in Fig. 7 in a shape of a concave curved surface at the center is formed, and an engagement hole 71 for preventing rotation illustrated in Fig. 5 at a position which is apart from the center, is formed.

In contrast, in the first link plate 21 and the second link plate 23, a rotation regulating portion 73 which regulates the rotational behavior of each of the lining assemblies 27 by being loosely fitted to the engagement hole 71, is provided.

The back plate abutting curved surface portion 75 which faces the back plate portion 33 is projected in the first link plate 21 and the second link plate 23, and the link abutting portion 69 rotatably abuts against the back plate abutting curved surface portion 75. In the embodiment, the back plate abutting curved surface portion 75 is formed on the convex curved surface. The rotation regulating portion 73 is made by folding a protruded piece which extends to end portions of the first link plate 21 and the second link plate 23, to the engagement hole side.

Next, an assembling order of the first friction pad assembly 13 and the second friction pad assembly 15 will be described with an example of the first friction pad assembly 13.

First, as illustrated in Fig. 5, in the guide hole portion 59 of the guide plate 25 in which the rear surface is set to be oriented upward, the lining assembly 27 is mounted to be inserted so that the friction material 61 is protruded on the front surface side (lower side in Fig. 6) of the guide plate 25. The lining assembly 27 which is mounted to be inserted in the guide hole portion 59 is in a state where the retaining flange portion 65 abuts against the circumferential edge portion of the guide hole portion 59.

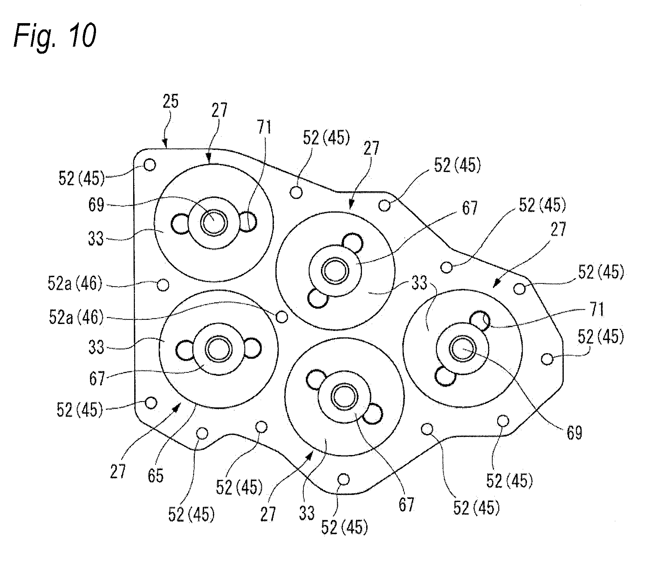

Next, the disc spring 67 is mounted on the back plate portion 33 in each of the lining assemblies 27 (refer to Fig. 10). Furthermore, the back plate abutting curved surface portion 75 is engaged with the inner diameter portion 66 of the disc spring 67 to face the center of the rear surface of the back plate portion 33. At the same time, the rotation regulating portion 73 of the first link plate 21 and the second link plate 23 is engaged with the engagement hole 71 for preventing rotation, and as illustrated in Fig. 5, the first link plate 21 and the second link plate 23 are stacked on the disc spring 67. In addition, the spacer member 41 of the interval holding mechanism 39 is stacked on the same axle as that of the hole portion 52a which is at a predetermined position in the vicinity of the center portion of the guide plate 25.

In a state where the disc spring 67, and the first link plate 21 and the second link plate 23 are mounted on the rear surface side of the lining assembly 27, the torque receiving plate 17 is fixed to the outer circumferential portion of the guide plate 25 by the rivet 31 of the fastening portion 45. Furthermore, a part which constitutes the constituent component accommodation space 38 of the torque receiving plate 17 and the guide plate 25, is fixed to be sandwiched by the rivets 34 and 36 of the fastening portion 46 which penetrates the guide plate 25, the spacer member 41, and the torque receiving plate 17. At this time, since the step portion 53 illustrated in Fig. 6 is provided on one end side of the spacer member 41 in the interval holding mechanism 39, positioning is easy by fitting the spacer member 41 to the hole portion 51 a on the other end side.

Next, operations of the friction pad assembly for a disk brake 11 having the above-described configuration, will be described.

In the friction pad assembly for a disk brake 11 according to the embodiment, the positions of each of the lining assemblies 27 on the torque receiving plate 17 are regulated by fitting the plate fitting portion 63 of the lining assembly 27 and the guide hole portion 59 of the guide plate 25 in a direction parallel to the front surface of the disk rotor of the lining assembly 27. The positions of the lining assemblies 27 are regulated by making the link abutting portion 69 of the lining assembly 27 abut against the back plate abutting curved surface portion 75 of the first link plate 21 and the second link plate 23 in a direction orthogonal to the front surface of the disk rotor.

Therefore, the braking torque which acts on the lining assembly 27 when braking is performed, is transmitted to the guide plate 25, and is directly transmitted to the torque receiving plate 17 to which the guide plate 25 is fixed.

In addition, the pressing force which presses the lining assembly 27 to the disk rotor is transmitted to the first link plate 21 and the second link plate 23 via a contact portion between the link supporting portion 55 of the torque receiving plate 17 and the plate abutting curved surface portion 57 of the first link plate 21 and the second link plate 23, from the torque receiving plate 17, and is transmitted to the lining assembly 27 via a contact portion between the back plate abutting curved surface portion 75 of the first link plate 21 and the second link plate 23, and the link abutting portion 69 of the lining assembly 27.

In other words, a member (guide plate 25) which receives the braking torque from the lining assembly 27 and a member (first link plate 21 and second link plate 23, and torque receiving plate 17) which transmits the pressing force to the lining assembly 27, are separately set. Here, the braking torque which becomes a large load acts on the contact portion between the lining assembly 27 which transmits the pressing force to the lining assembly 27, and the first link plate 21 and the second link plate 23, and the contact portion between the first link plate 21 and the second link plate 23, and the torque receiving plate 17.

For this reason, each of the contact portions which transmits the pressing force is not necessarily strongly engaged, such as a ball joint which stops the braking torque, and it is possible to realize a reduction in cost by reducing of the processing accuracy requirements and improvement of productivity.

In addition, in the friction pad assembly for a disk brake 11 described above, in a case where the reactive force of the pressing force is within a general range when the friction material 61 is pressed to the disk rotor, the force is transmitted via the back plate abutting curved surface portion 75 of the first link plate 21 and the second link plate 23 and the plate abutting curved surface portion 57 from the lining assembly 27, and is stopped in the torque receiving plate 17. However, when an excessive reactive force is input from the disk rotor, the first link plate 21 and the second link plate 23 which are manufactured by press processing are deformed to bury the turnable void between the torque receiving plate 17, and the first link plate 21 and the second link plate 23, and robustly abut against the torque receiving plate 17.

For this reason, the first link plate 21 and the second link plate 23 bring each of the vicinity of the back plate abutting curved surface portion 75 and the plate abutting curved surface portion 57 into contact with the torque receiving plate 17, and transmit the excessive reactive force to the torque receiving plate 17, and at the same time, damage is prevented.

In addition, in the friction pad assembly for a disk brake 11 described above, the outer diameter of the retaining flange portion 65 which is formed in the back plate portion 33 of the lining assembly 27 is set to be greater than that of the guide hole portion 59 of the guide plate 25, the lining assembly 27 does not fall out from the guide plate 25 as the retaining flange portion 65 is hooked, and thus, high stability is obtained.

In addition, since an independent dedicated component is not added for preventing the lining assembly 27 from falling out from the guide plate 25 of the lining assembly 27, it is possible to avoid disadvantages, such as an increase in cost due to an increase in the number of components, or deterioration of productivity due to an increase in the number of assembly processes.

In addition, in the friction pad assembly for a disk brake 11 described above, in order to increase transmission efficiency of the braking torque when the lining assembly 27 comes into contact with the disk rotor, the rotation of the lining assembly 27 within a surface parallel to the front surface of the disk rotor is regulated by fitting the engagement hole 71 which is formed in the back plate portion 33 of the lining assembly 27 to the rotation regulating portion 73 which is projected in the first link plate 21 and the second link plate 23. In other words, in regulating the rotation of the lining assembly 27 within the surface parallel to the front surface of the disk rotor, since the independent dedicated component is not added, the number of components for regulating the rotation of the lining assembly 27 does not increase, and it is possible to avoid disadvantages, such as an increase in cost due to an increase in the number of components, or deterioration of productivity due to an increase in the number of assembly processes.

Furthermore, in the friction pad assembly for a disk brake 11 described above, the plurality of lining assemblies 27 are in a state of being laid to be spread in a planar shape, but since the disc spring 67 which is disposed to be held between the back plate portion 33 of the lining assembly 27 and the guide plate 25 absorbs a dimensional tolerance in a thickness direction of the lining assembly 27, it is possible to prevent generation of irregularity in contact properties of the lining assembly 27 with respect to the disk rotor.

Therefore, without receiving an influence of the dimensional tolerance in the thickness direction of the lining assembly 27, it is possible to maintain stabilized braking properties.

In addition, in the friction pad assembly for a disk brake 11 of the embodiment, as the guide plate 25 and the torque receiving plate 17 have an integrated housing structure by fastening the rivets 31, 34, and 36, it is possible to obtain a strong housing structure in which looseness due to vibration or the like is not generated, at a low cost.

In addition to the above-described basic operations, the friction pad assembly for a disk brake 11 according to the embodiment performs operations described further below with the above-described housing structure.

In other words, in the friction pad assembly for a disk brake 11 of the embodiment, as described above, each of the center of gravity (area center on the lining surface of the friction material 61) 47 of all of the lining assemblies 27, is positioned on the inner side of the triangle 49 which links three locations from the centers of the plurality of the fastening portions 45 and 46 that are disposed in the periphery of each of the lining assemblies 27 (refer to Fig. 9). Accordingly, when the pressing force from the lining assembly 27 is transmitted, the guide plate 25 and the torque receiving plate 17 which constitute the housing structure can receive the pressing force from the lining assembly 27 in a state where the center of gravity 47 of the lining assemblies 27 is positioned on the inner sides of at least the fastening portions 45 and 46 disposed in the triangle, and sufficient housing strength can be ensured.

In addition, in the friction pad assembly for a disk brake 11 of the embodiment, the guide plate 25 and the torque receiving plate 17 have an integrated housing structure by being fastened and fixed by the rivet 31 of the fastening portion 45 in the outer circumferential portion, and the interval holding mechanism 39 which holds the interval 35 of the constituent component accommodation space 38 is provided in the fastening portion 46 of the part in which the torque receiving plate 17 and the constituent component accommodation space 38 of the guide plate 25 are formed. By the interval holding mechanism 39, a part of the pressing force, which acts on the torque receiving plate 17 in the part in which the constituent component accommodation space 38 of the torque receiving plate 17 is formed, is supported. Accordingly, the rigidity of the torque receiving plate 17 in which the outer circumferential portion is fixed to the guide plate 25 is improved compared to that in a case where the interval holding mechanism 39 is not provided, and it is possible to reduce the thickness of the torque receiving plate 17. As a result, it is possible to realize a reduction in cost by reducing of the processing accuracy requirements of the components to be used and an improvement of productivity.

In addition, the interval holding mechanism 39 of the fastening portion 46 which is provided at the part in which the constituent component accommodation space 38 is formed other than the outer circumferential portion of the guide plate 25 and the torque receiving plate 17, includes the spacer member 41 which is intervened between the guide plate 25 and the torque receiving plate 17, and the rivets 34 and 36 which sandwich and fix the guide plate 25, the spacer member 41, and the torque receiving plate 17 by penetrating the guide plate 25, the spacer member 41, and the torque receiving plate 17. According to this, it is possible to ensure the excellent accuracy and low cost of the constituent component accommodation space 38 in the vicinity of a center portion of the guide plate 25 and the torque receiving plate 17, and firm fastening is realized.

Furthermore, the friction pad assembly for a disk brake 11 according to the embodiment performs operations described further below with the disc spring 67.

In other words, in the friction pad assembly for a disk brake 11 of the embodiment, as described above, the single plate abutting curved surface portions 57 which are respectively provided in the first link plate 21 and the second link plate 23 abut against the link supporting portion 55 of the torque receiving plate 17, and each of the first link plate 21 and the second link plate 23 are turnably supported with respect to the torque receiving plate 17. In addition, the back plate abutting curved surface portions 75 which are provided in the first link plate 21 and the second link plate 23 abut against the link abutting portions 69 of the back plate portions 33 of each of the lining assemblies 27, and the lining assembly 27 is turnably supported with respect to the first link plate 21 and the second link plate 23.

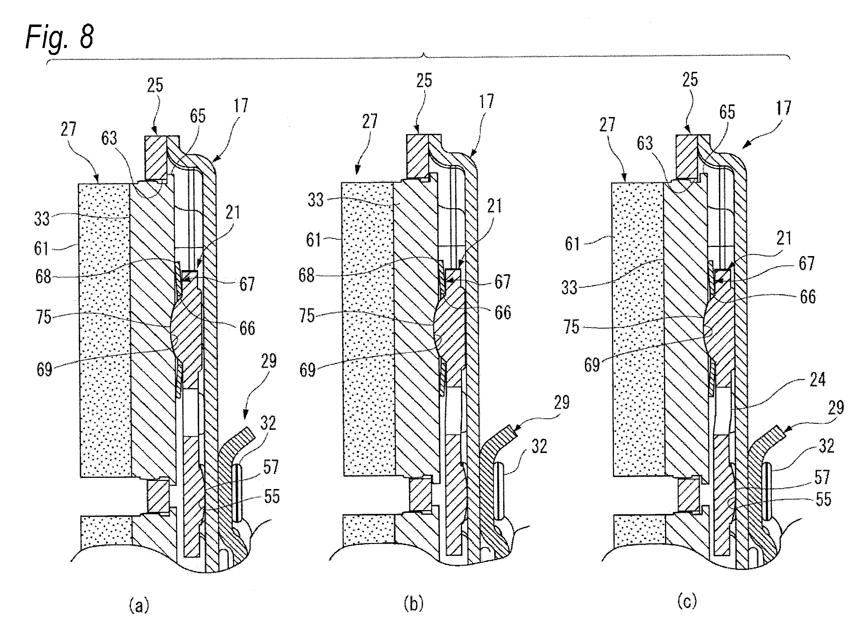

Here, when braking is not performed as illustrated in Fig. 8(a), the lining assembly 27 is supported in a state of being biased to the guide plate 25 side, by the disc spring 67 which is mounted in a compressed state between the back plate portion 33 which opposes the first link plate 21 or the second link plate 23, and the front surface of the first link plate 21 or the second link plate 23. In the compressed state of being held between the first link plate 21 or the second link plate 23 and the back plate portion 33, the disc spring 67 biases the lining assembly 27 to the guide plate 25 side so that the retaining flange portion 65 is maintained in a state of being abutted against the circumferential edge portion of the guide hole portion 59.

Then, when braking is started to be performed as illustrated in Fig. 8(b), the pressing force which presses the lining assembly 27 to the disk rotor, is transmitted to the lining assembly 27 via the first link plate 21 and the second link plate 23, and the disc spring 67, from the torque receiving plate 17.

As illustrated in Fig. 8(c), when the reactive force from the disk rotor increases, the spring member 67 and a plate flexible portion 24 of the first link plate 21 and the second link plate 23 are elastically deformed, and the pressing force which presses the lining assembly 27 is transmitted to the lining assembly 27 only via the first link plate 21 and the second link plate 23, from the torque receiving plate 17. At this time, the retaining flange portion 65 separates from the circumferential edge portion of the guide hole portion 59, the lining assembly 27 is turnably supported with respect to the first link plate 21 or the second link plate 23 by the back plate abutting curved surface portion 75, and adjustment of position is possible.

Therefore, since the lining assembly 27 which has a high degree of freedom in turning follows undulation of the front surface of the disk rotor in each of individual turning operations, and comes into contact with the front surface of the disk rotor, it is possible to maintain a stabilized friction area, and to maintain stabilized braking properties.

The first link plate 21 and the second link plate 23 which adjust the position of the lining assembly 27 are placed to compress the disc spring 67 and abut against the lining assembly 27. In other words, the guide plate 25, and the first link plate 21 and the second link plate 23 receive a set load of the disc spring 67. When braking is released, the lining assembly 27 of which the position is adjusted when braking is performed, is at a position (that is, a reset position) where the retaining flange portion 65 abuts against the circumferential edge portion of the guide hole portion 59 again by the set load of the disc spring 67. Therefore, even when the uneven wear is generated due to a high temperature or the like when braking is performed, if braking is released, the lining assembly 27 returns to the reset position where the retaining flange portion 65 abuts against the circumferential edge portion of the guide hole portion 59 due to a generated posture of the uneven wear. Accordingly, when braking is performed next time, since the lining assembly 27 starts coming into contact with the front surface of the disk rotor from a convex portion on the lining surface, an increase in the uneven wear is suppressed.

In the friction pad assembly for a disk brake 11 of the embodiment, the inner diameter portion 66 of the disc spring 67 abuts against the first link plate 21 and the second link plate 23, and the outer diameter portion 68 abuts against the back plate portion 33 of the lining assembly 27. Here, when the lining surface follows the deformation of the front surface of the disk rotor by the heat or the like in the middle of braking, if an inclination is generated in the lining assembly 27, a restraining force with respect to the inclination of the lining assembly 27 due to the disc spring 67 having a high spring constant increases. Accordingly, inducing vibration is suppressed, and generation of brake noise is reduced.

Therefore, in the friction pad assembly for a disk brake 11 according to the embodiment, it is possible to suppress generation of brake noise by strengthening rigidity of a housing structure.

In addition, in the friction pad assembly for a disk brake 11 according to the embodiment, it is possible to enhance a degree of freedom in turning of the lining assembly 27, and to suppress uneven wear.

Here, each of characteristics of the friction pad assembly for a disk brake according to the present invention described above, will be simply summarized.
[1] A friction pad assembly for a disk brake, comprising:
   a plurality of lining assemblies which are turnably supported by a guide plate receiving braking torque so as to be pressed to a disk rotor;
   a back plate portion which is fixed to a back surface of a friction material of the lining assembly;
   a plurality of guide hole portions which are provided in the guide plate, and through which at least the friction material of each of the lining assemblies penetrates to a side of the disk rotor;
   a torque receiving plate which is fixed to the guide plate in which a constituent component accommodation space is formed, and constitutes a housing structure together with the guide plate;
   a link plate which is provided between the torque receiving plate and the back plate portion, is arranged to bridge over the plurality of lining assemblies, so as to transmit a pressing force from the torque receiving plate to the lining assembly; and
   fastening portions which are provided across the guide plate and the torque receiving plate and around each of the lining assemblies, and which are disposed at least at each apex position of a triangle that surrounds a center of gravity of the lining assembly.
[2] The friction pad assembly for a disk brake according to the above-described [1], inwhich
   the fastening portion, which is provided at parts of the guide plate and the torque receiving plate where the constituent component accommodation space is formed, includes an interval holding mechanism which holds an interval of the constituent component accommodation space.
[3] The friction pad assembly for a disk brake according to the above-described [2], in which the interval holding mechanism includes a spacer member which is intervened between the guide plate and the torque receiving plate, and a fastening member which sandwiches and fixes the guide plate, the spacer member, and the torque receiving plate by penetrating the guide plate, the spacer member, and the torque receiving plate.
[4] The friction pad assembly for a disk brake according to the above-described [3], in which a step portion, which is fitted to a hole portion formed on the guide plate or the torque receiving plate, is formed on at least one end side of the spacer member in a separating direction of the constituent component accommodation space.
[5] A friction pad assembly for a disk brake, comprising:
   a plurality of lining assemblies which are turnably supported by a guide plate which receives braking torque so as to be pressed to a disk rotor;
   a plate fitting portion which is provided on an outer circumferential surface of a back plate portion fixed to a back surface of a friction material of the lining assembly, and is turnably fitted to a guide hole portion provided in the guide plate;
   a retaining flange portion which is provided in the lining assembly, and has an outer diameter greater than that of the guide hole portion;
   a torque receiving plate which is fixed to the guide plate so as to have an interval between the back plate portion and the torque receiving plate;
   a link plate which is provided between the torque receiving plate and the back plate portion, is arranged to bridge over the plurality of lining assemblies, so as to transmit a pressing force from the torque receiving plate to the lining assembly;
   a single plate abutting curved surface portion which is provided in the link plate abuts against a link supporting portion of the torque receiving plate, and turnably supports the link plate;
   a plurality of back plate abutting curved surface portions which are provided in the link plate, respectively abut against link abutting portions at centers of the back plate portions of the lining assemblies, and turnably support the lining assemblies;
   a rotation regulating portion which is provided in the link plate, is loosely fitted to an engagement hole at a position apart from the center of the back plate portion of each of the lining assemblies, and regulates turning behavior of each of the lining assemblies; and
   a spring member which is held between the link plate and the back plate portion, and supports the lining assembly so as to bias the lining assembly to a side of the guide plate.
[6] The friction pad assembly for a disk brake according to the above-described [5], in which the spring member is made of a disc spring, and
   an inner diameter portion of the disc spring abuts against the link plate, and an outer diameter portion of the disc spring abuts against the back plate portion.

In addition, the friction pad assembly for a disk brake of the present invention is not limited to the above-described embodiment, and can be appropriately modified and improved.

For example, when one friction pad assembly for a disk brake is configured of a plurality of unit friction pad assemblies, the number of the configuring unit friction pad assemblies may be one, or three or more.

In addition, the present application is based on Japanese Patent Application (No. 2012-246707) filed on November 8, 2012 and Japanese Patent Application (No. 2012-247713) filed on November 9, 2012, and the contents thereof are included here by way of reference.

### Industrial Applicability

According to a friction pad assembly for a disk brake according to the present invention, it is possible to suppress generation of brake noise by strengthening rigidity of a housing structure. In addition, in the friction pad assembly for a disk brake according to the present invention, it is possible to enhance a degree of freedom in turning of a lining assembly, and to suppress uneven wear.

### Reference Signs List

- 11:: Friction pad assembly for a disk brake
- 17:: Torque receiving plate
- 21:: First link plate (link plate)
- 23:: Second link plate (link plate)
- 25:: Guide plate
- 27:: Lining assembly
- 33:: Back plate portion
- 35:: Interval
- 38:: Constituent component accommodation space
- 41:: Spacer member
- 45, 46:: Fastening portion
- 47:: Center of gravity
- 51, 51a:: Hole portion
- 52, 52a:: Hole portion
- 53:: Step portion
- 57:: Plate abutting curved surface portion
- 59:: Guide hole portion
- 61:: Friction material
- 63:: Plate fitting portion
- 65:: Retaining flange portion
- 66:: Inner diameter portion
- 67:: Disc spring (spring member)
- 68:: Outer diameter portion
- 69:: Link abutting portion
- 71:: Engagement hole
- 73:: Rotation regulating portion
- 75:: Back plate abutting curved surface portion

## Claims

1. A friction pad assembly for a disk brake, comprising:
a plurality of lining assemblies which are turnably supported by a guide plate receiving braking torque so as to be pressed to a disk rotor;
a back plate portion which is fixed to a back surface of a friction material of the lining assembly;
a plurality of guide hole portions which are provided in the guide plate, and through which at least the friction material of each of the lining assemblies penetrates to a side of the disk rotor;
a torque receiving plate which is fixed to the guide plate in which a constituent component accommodation space is formed, and constitutes a housing structure together with the guide plate;
a link plate which is provided between the torque receiving plate and the back plate portion, is arranged to bridge over the plurality of lining assemblies, so as to transmit a pressing force from the torque receiving plate to the lining assembly; and
fastening portions which are provided across the guide plate and the torque receiving plate and around each of the lining assemblies, and which are disposed at least at each apex position of a triangle that surrounds a center of gravity of the lining assembly.

2. The friction pad assembly for a disk brake according to Claim 1, wherein
the fastening portion, which is provided at parts of the guide plate and the torque receiving plate where the constituent component accommodation space is formed, includes an interval holding mechanism which holds an interval of the constituent component accommodation space.

3. The friction pad assembly for a disk brake according to Claim 2, wherein
the interval holding mechanism includes a spacer member which is intervened between the guide plate and the torque receiving plate, and a fastening member which sandwiches and fixes the guide plate, the spacer member, and the torque receiving plate by penetrating the guide plate, the spacer member, and the torque receiving plate.

4. The friction pad assembly for a disk brake according to Claim 3, wherein
a step portion, which is fitted to a hole portion formed on the guide plate or the torque receiving plate, is formed on at least one end side of the spacer member in a separating direction of the constituent component accommodation space.

5. A friction pad assembly for a disk brake, comprising:
a plurality of lining assemblies which are turnably supported by a guide plate which receives braking torque so as to be pressed to a disk rotor;
a plate fitting portion which is provided on an outer circumferential surface of a back plate portion fixed to a back surface of a friction material of the lining assembly, and is turnably fitted to a guide hole portion provided in the guide plate;
a retaining flange portion which is provided in the lining assembly, and has an outer diameter greater than that of the guide hole portion;
a torque receiving plate which is fixed to the guide plate so as to have an interval between the back plate portion and the torque receiving plate;
a link plate which is provided between the torque receiving plate and the back plate portion, is arranged to bridge over the plurality of lining assemblies, so as to transmit a pressing force from the torque receiving plate to the lining assembly;
a single plate abutting curved surface portion which is provided in the link plate abuts against a link supporting portion of the torque receiving plate, and turnably supports the link plate;
a plurality of back plate abutting curved surface portions which are provided in the link plate, respectively abut against link abutting portions at centers of the back plate portions of the lining assemblies, and turnably support the lining assemblies;
a rotation regulating portion which is provided in the link plate, is loosely fitted to an engagement hole at a position apart from the center of the back plate portion of each of the lining assemblies, and regulates turning behavior of each of the lining assemblies; and
a spring member which is held between the link plate and the back plate portion, and supports the lining assembly so as to bias the lining assembly to a side of the guide plate.

6. The friction pad assembly for a disk brake according to Claim 5, wherein
the spring member is made of a disc spring, and
an inner diameter portion of the disc spring abuts against the link plate, and an outer diameter portion of the disc spring abuts against the back plate portion.
